# EUROPEAN PATENT APPLICATION

(11) **EP 3 168 450 A1**
(43) Date of publication of application: **17.05.2017**
(21) Application number: 15194216.6
(22) Date of filing: 12.11.2015
(51) Int. Cl.: F02M 26/05, F02M 26/35, F01N 3/027, F01N 3/023, F01N 3/20, F01N 3/01, F02M 26/23, F02M 26/24

(54) **INTERNAL COMBUSTION ENGINE, METHOD FOR CLEANING EXHAUST FROM AN INTERNAL COMBUSTION ENGINE AND METHOD FOR REFITTING AN INTERNAL COMBUSTION ENGINE**

(71) Applicant: Winterthur Gas & Diesel Ltd., 8401 Winterthur (CH)
(72) Inventor: Akrour, Matthieu, 4051 Basel (CH); Schäpper, Daniel, 8615 Wermatswil (CH); Sangram Kishore, Nanda, 8409 Winterthur (CH)
(74) Representative: Hepp Wenger Ryffel AG

(57) **Abstract**

An Internal combustion engine (1), preferably a two-stroke engine for a large vessel, comprises an exhaust outlet (2) for disposing of exhaust out of a combustion chamber and an air inlet (3) for introducing air into the combustion chamber. At least one turbocharger (4) is connected to the exhaust outlet (2) by an exhaust passage (5) wherein a particulate filter device (6) is arranged downstream the exhaust outlet (2) on the high pressure side of the turbocharger, in particular of a turbine of the turbocharger, preferably in the exhaust passage (5).

## Description

The present invention relates to an internal combustion engine, a method for cleaning exhaust from an internal combustion engine and a method for refitting an internal combustion engine according to the independent claims.

Due to air pollution rules the treatment of exhaust of an internal combustion engine especially of a large vessel is becoming increasingly important.

From US 7,356,987 it is for example known to treat the exhaust from a combustion engine with an exhaust gas recirculation system having an electrostatic precipitator. The system is arranged on the low pressure side of a compressor and therefore is very spacious and difficult to install.

It is therefore an object of the present invention to avoid the drawbacks of the prior art and provide an internal combustion engine, a method for cleaning exhaust from an internal combustion engine and a method for refitting an internal combustion engine which are small enough to fit in an existing engine space and easy to install.

The object is accomplished by an internal combustion engine, a method for cleaning exhaust from an internal combustion engine and a method for refitting an internal combustion engine according to the independent claims.

In particular, the object is achieved by an internal combustion engine, preferably a two-stroke engine for a large vessel, comprising an exhaust outlet for disposing of exhaust out of a combustion chamber. The internal combustion engine comprises an air inlet for introducing air into the combustion chamber and at least one turbocharger being connected to the exhaust outlet by an exhaust passage. A particulate filter device is arranged downstream the exhaust outlet on the high pressure side of the turbocharger, in particular a turbine of the turbocharger, preferably in the exhaust passage.

Such an internal combustion engine leads to the possibility to filter the exhaust in particular from particle matter such that exhaust regulations are achieved by means of a small device. The particulate filter device can be built smaller since it is arranged on the high pressure side of the turbocharger.

The high pressure side of the turbocharger comprises all pipelines and devices arranged between exhaust outlet of the engine and turbine of the turbocharger and between compressor of the turbocharger and air inlet of the engine. As a matter of fact all devices arranged in between those two pipelines are included in high pressure side of the turbocharger.

The particulate filter device can comprise an electrostatic precipitator or a particulate filter or a venturi scrubber.

An electrostatic precipitator is able to collect fine particles and thereby clean the exhaust emitted from the internal combustion engine.

The particulate filter device can comprise a cyclone.

The application of a cyclone enables collection of large agglomerated particles and thereby leads to cleaner exhaust.

The arrangement of electrostatic precipitator and cyclone is preferably first the electrostatic precipitator and downstream the electrostatic precipitator the cyclone. This arrangement leads to the possibility to collect particle matter that has been collected on the collecting plate of the electrostatic precipitator by means of the cyclone when the particle matter falls away from the collecting plate of the electrostatic precipitator. Optionally, exhaust can be divided downstream the electrostatic precipitator such that only part of the exhaust is additionally led through the cyclone.

The exhaust passage can comprise a filtering path comprising the particulate filter device and a standard path such that only a part of the exhaust is filtered.

This way the use of the particulate filter device can be adapted to the emission rules which are applicable and thereby a lifetime of the particulate filter device can be increased.

The internal combustion engine can comprise an exhaust gas recirculation path arranged between the exhaust outlet and air inlet of the internal combustion engine, wherein the particulate filter device is arranged in the exhaust gas recirculation path such that only part of the exhaust is led through the particulate filter device and re-introduced into the air inlet.

In this case, the filtering path is realized by an exhaust gas recirculation path. Alternatively, the particulate filter device can be arranged upstream a connection point of the exhaust gas recirculation path such that all exhaust is led through the particulate filter device and downstream the particulate filter device part of the exhaust is recirculated and part of the exhaust is preferably led to a turbine of a turbocharger.

By such an arrangement particulate matter is not introduced into the combustion chamber and therefore the combustion process is optimized.

At least one selective catalytic reactor can be arranged downstream the particulate filter device.

The use of a selective catalytic reactor reduces NO_{X}. As a reductant for example urea or ammonia can be added. Such a selective catalytic reactor thereby enables the compliance with the exhaust limitations.

At least one heat exchanger, preferably a cooler, can be arranged upstream or downstream the particulate filter device or at least two heat exchangers can be arranged downstream the exhaust outlet on a high pressure side of the turbocharger, preferably one heat exchanger upstream the particulate filter device and one heat exchanger downstream in the particulate filter device.

By using heat exchangers upstream or downstream the particulate filter device or upstream and downstream the particulate filter device the temperature of the exhaust streaming through the particulate filter device can be adapted such that the particulate filter device operates optimally. The use of an additional heat exchanger or a heat exchanger downstream the particulate filter device leads to the possibility to additionally adapt the temperature of the exhaust to all other devices being arranged downstream the particulate filter device.

The particulate filter device, in particular the electrostatic precipitator, can be a dry precipitator or a wet precipitator.

The advantage of a dry precipitator is that a dry precipitator does not need any water and therefore no water after-treatment equipment is necessary. The advantage of a wet precipitator is the cleaning effect of water on the precipitator such that oily particles do not clog the precipitator.

An additive adding device can be arranged upstream and/or downstream the particulate filter device.

To optimize the cleaning/filtering of the exhaust and the functioning of the particulate filter device the additive adding device can add additives to the exhaust. As additives solids or liquids can be added. The additive can be an alkaline. The additive can be used to reduce SO_{X} and/or NO_{X}. The additive can be limestone (CaC) or lime kiln (CaO) or hydrated lime (Ca(OH)₂) or sodium bicarbonate (NaHCO₃) or sodium carbonate (Na₂CO₃) or caustic soda (NaOH) or a mixture of the mentioned additives or further additives.

The additive adding device can be at least one scrubber being arranged upstream or downstream the particulate filter device or at least two scrubbers being arranged downstream the exhaust outlet on the high pressure side of the engine, preferably one scrubber upstream the particulate filter device an one scrubber downstream the particulate filter device.

As additives in the scrubber water and/or caustic soda can be used. Other additives are of course perceivable.

By using a scrubber as an additive adding device an additional device is not necessary. Additionally, the scrubber is used to clean exhaust directly, preferably in the exhaust gas recirculation path.

The internal combustion engine can comprise a cleaning device for cleaning the particulate filter device, in particular ultrasonic cleaning device or a heat cleaning device.

By means of a cleaning device the particulate filter can be cleaned and therefore used for a longer time than without a cleaning device.

The object is additionally achieved by a method for cleaning exhaust from an internal combustion engine, preferably two stroke engines for a large vessel, comprising the step of directing exhaust from an exhaust outlet through a particulate device arranged between exhaust outlet and turbocharger or between exhaust outlet and air inlet of the internal combustion engine.

A method is preferably carried out in an internal combustion engine as previously described.

By using a particulate filter device on a high pressure side the exhaust can be cleaned reliably by means of a comparably small device. Therefore, the special needs of the particulate filter device are lower and easier to install.

All of the exhaust can be directed to the particulate filter device.

This way all the exhaust is cleaned.

The exhaust from the particulate filter device can be directed through a selective catalytic reactor, in particular before or after entering the turbine of the turbocharger. This way, in addition to the particulate matter, even NO_{X} is reduced.

The exhaust can be cooled before and/or after entering the particulate filter device, in particular between exhaust outlet and air inlet of the internal combustion engine.

This way the particulate filter device works optimally and the exhaust is further in an optimal temperature range for reintroducing the exhaust into the internal combustion engine.

Only a part of the exhaust can be directed through the particulate filter device.

This way the particulate filter device is only used when needed and thereby its lifetime is optimized.

The part of the exhaust being led through the particulate filter device can be recirculated through an exhaust gas recirculation path and reintroduced into an air inlet.

This way less particle matter re-enters the combustion chamber and the combustion process is optimized.

An additive, in particular an alkaline, can be added to the exhaust before or after entering the particulate filter device. The additive can alternatively or additionally be limestone (CaC) or lime kiln (CaO) or hydrated lime (Ca(OH)₂) or sodium bicarbonate (NaHCO₃) or sodium carbonate (Na₂CO₃) or caustic soda (NaOH) or a mixture of the mentioned additives or further additives.

This way the cleaning of the exhaust is optimized. Possible additives are water, caustic soda, limestone, limekiln, hydrated lime, sodium bicarbonate, sodium carbonate or a mixture of the mentioned additives as already described previously.

A particulate filter device can be cleaned by means of a cleaning device, in particular an ultrasonic cleaning device or a heat cleaning device.

This way the filter can be cleaned and the lifetime is increased.

The object is additionally achieved by a method for refitting an internal combustion engine by installing a particulate filter device between an exhaust outlet of an internal combustion engine and a turbocharger or between an exhaust outlet of the internal combustion engine and the air inlet of the internal combustion engine.

This method leads to an internal combustion engine as previously described. The particle matter of the exhaust is reduced and the official exhaust limitations are complied with using an exhaust treatment device which is as small as possible.

In the following the invention is further described by means of figures in embodiments. It shows
- Figure 1: a schematic view of an internal combustion engine in a first embodiment,
- Figure 2: a schematic view of an internal combustion engine in a second embodiment comprising an exhaust gas recirculation,
- Figure 3: a schematic view of a third embodiment comprising an exhaust gas recirculation,
- Figure 4: a schematic view of a fourth embodiment comprising a selective catalytic reactor,
- Figure 5: a schematic view of a fifth embodiment comprising an additive adding device,
- Figure 6: a schematic view of a sixth embodiment comprising a cleaning device.

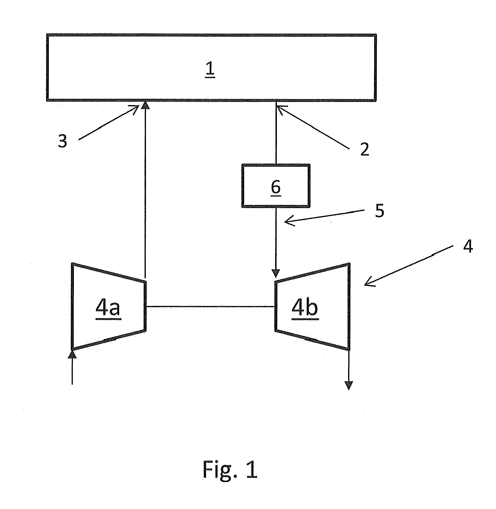

Figure 1 shows a schematic view of an internal combustion engine 1. The internal combustion engine 1 comprises a turbocharger 4, which turbocharger 4 comprises a compressor 4a and a turbine 4b. The internal combustion engine 1 comprises an exhaust outlet 2 through which exhaust can exit the combustion chamber. The exhaust outlet 2 can also be arranged at an exhaust manifold as usual in the state of the art in all of the following embodiments. From the exhaust outlet 2 exhaust is led through particulate filter device 6 in exhaust passage 5. After being filtered through the particular filter device 6, the exhaust drives a turbine 4b of a turbocharger 4 and is then disposed of. Fresh air is introduced into the internal combustion engine 1 through air inlet 3 after being compressed by the compressor 4a of the turbocharger 4. The particulate filter device 6 comprises an electrostatic precipitator and a cyclone, wherein the electrostatic precipitator is arranged upstream from the cyclone. Due to the arrangement of the particulate filter device 6 between exhaust outlet 2 and turbine 4b of the turbocharger 4, the particulate filter device 6 is comparably small.

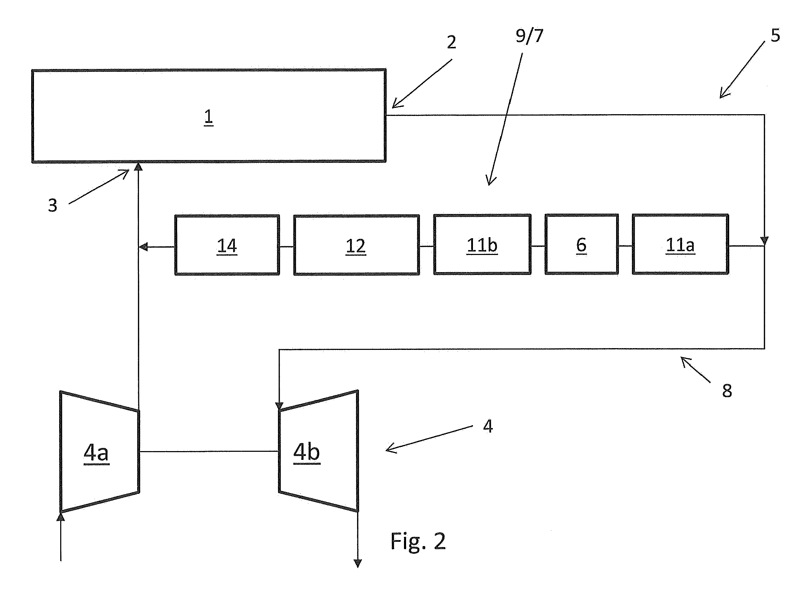

Figure 2 shows a second embodiment of the internal combustion engine 1. The internal combustion engine 1 comprises an exhaust outlet 2 similar to the first embodiment. The exhaust is led through exhaust outlet 2 through exhaust passage 5. Exhaust passage 5 is divided into a filtering path 7 and a standard path 8. The standard path 8 leads exhaust to the turbine 4b of turbocharger 4. A filtering path 7 is incorporated as an exhaust gas recirculation path 9. The exhaust gas recirculation path leads exhaust from the exhaust passage 5 to a path between compressor 4a of the turbocharger 4 and air inlet 3. Hence, before air inlet 3 fresh air from the compressor is mixed with exhaust from the exhaust outlet 2. The exhaust gas recirculation path 9 comprises a particulate filter device 6, a scrubber 12 and a blower 14. Additionally, before and after the particulate filter device 6 heat exchangers 11 are arranged. Heat exchanger 11a is arranged upstream the particulate filter device 6 and heat exchanger 11b is arranged downstream the particulate filter device 6. This way the temperature of the exhaust can be optimally adapted: first to the needed temperature of the particulate filter device 6 and then to the optimal temperature for the scrubber 12 and the reintroduction into the internal combustion engine 1. The particulate filter device 6 comprises an electrostatic precipitator and a cyclone. By means of the particulate filter device 6 and the scrubber 12 the exhaust in cleaned before being reintroduced into the internal combustion engine 1 which leads to an optimized combustion process. The blower 14 increases the pressure of the exhaust especially at low load conditions when the turbocharger 4 is not capable of producing an adequate pressure level.

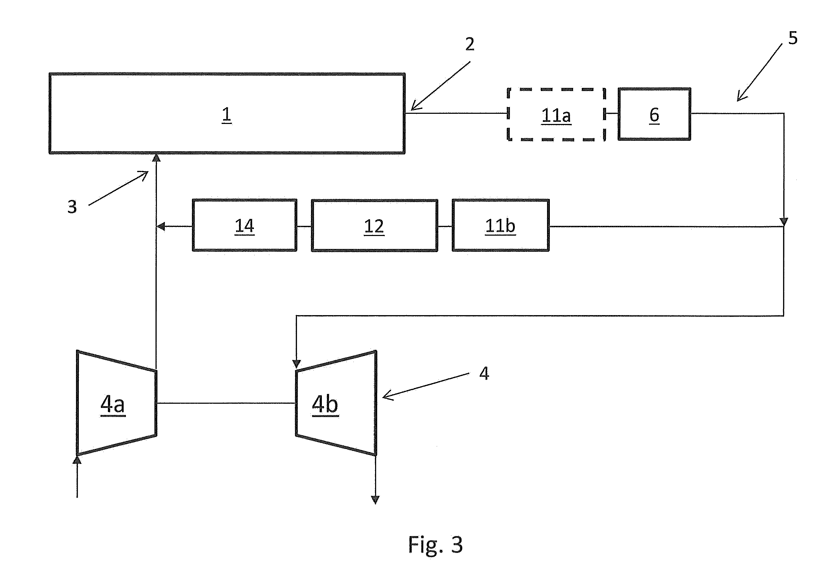

Figure 3 shows a third embodiment of the internal combustion engine 1. Analogously to the first two embodiments as shown in Figure 1 and 2, the internal combustion engine 1 comprises an exhaust outlet 2 and an air inlet 3. Exhaust from the internal combustion engine 1 is led through exhaust outlet 2 through exhaust passage 5. Exhaust passage 5 comprises a particulate filter device 6 and an optional heat exchanger 11a arranged upstream the particulate filter device 6. The particular filter device 6 comprises an electrostatic precipitator and a cyclone. Downstream the particular filter device 6 the exhaust passage 5 is divided into an exhaust gas recirculation path 9 and a standard path 8. Exhaust is led from the exhaust outlet 2 through particulate filter device 6 via standard path 8 to a turbine 4b of a turbocharger 4. Downstream the particulate filter device 6 the exhaust gas recirculation path 9 divides exhaust to be recirculated into the internal combustion engine 1. The exhaust gas recirculation path 9 comprises a second heat exchanger 11b, a scrubber 12 and a blower 14. Fresh air is compressed by the compressor 4a of the turbocharger 4 mixed with recirculated and cleaned exhaust and then reintroduced through air inlet 3 into the internal combustion engine 1. In this embodiment all of the exhaust is filtered in the particulate filter device 6 such that the exhaust emissions are always filtered contrary to the embodiment in figure 2.

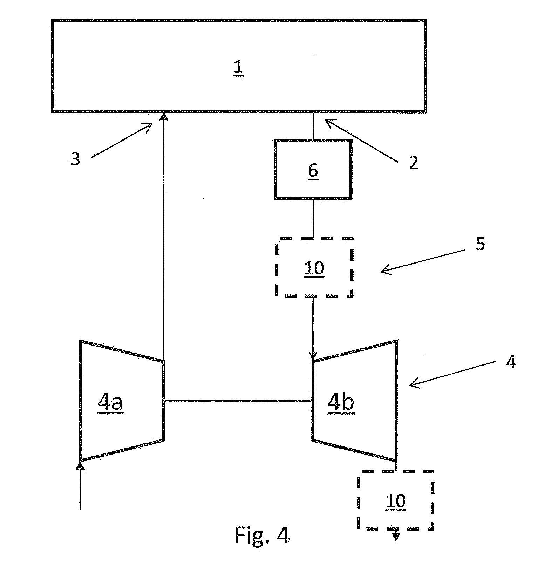

Figure 4 shows a fourth embodiment of the internal combustion engine 1 comprising the exhaust outlet 2 and an air inlet 3 as in all other embodiments. The exhaust from exhaust outlet 2 is led through exhaust passage 5 comprising a particulate filter device 6 and an optional selective catalytic reactor 10. The selective catalytic reactor 10 is either arranged upstream or downstream the turbine 4b of a turbocharger 4. The turbocharger 4 comprises a compressor 4a which introduces fresh compressed air through air inlet 3. The particulate filter device 6 comprises an electrostatic precipitator and a cyclone to remove particle mater from the exhaust. The selective catalytic reactor 10 removes NO_{X} from the exhaust such that the exhaust emission limits are met.

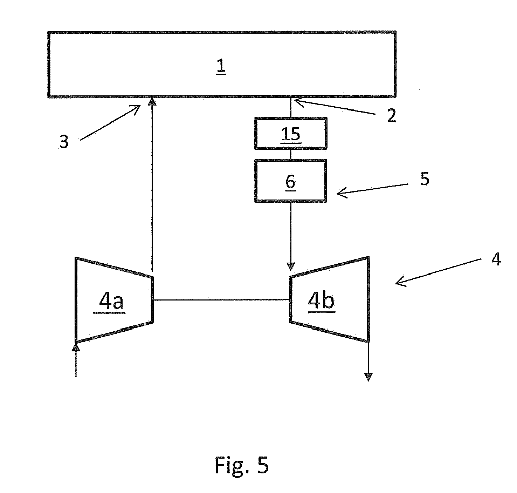

Figure 5 shows a fifth embodiment of the present invention of the internal combustion engine 1 comprising an exhaust outlet 2 and an air inlet 3 as all the other embodiments. Exhaust is led from exhaust outlet 2 through exhaust passage 5 comprising a particulate filter device 6 and an additive adding device 15 arranged upstream the particulate filter device 6. The particulate filter device 6 comprises an electrostatic precipitator and a cyclone. The exhaust from the particulate filter device 6 is directed to a turbine of a turbocharger 4. The turbocharger 4 comprises a compressor 4a which compresses fresh air which is introduced into the internal combustion engine 1 through air inlet 3 after the compression.

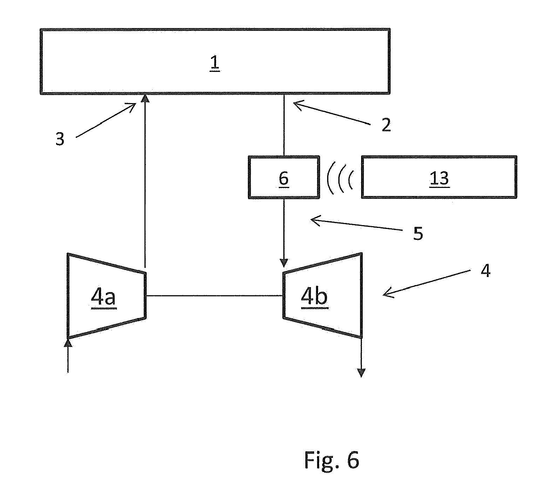

Figure 6 shows an internal combustion engine 1 having an exhaust outlet 2 and an air inlet 3. The exhaust from the internal combustion engine 1 is directed through exhaust outlet 2 into exhaust passage 5. The exhaust passage 5 comprises particulate filter device 6. After being led trough particulate filter device 6 the exhaust is directed to a turbine 4b of a turbocharger 4. The particulate filter device 6 comprises an electrostatic precipitator which can be cleaned by cleaning device 13. The cleaning device 13 is an ultrasonic or heat cleaning device. Additionally, the particulate filter device 6 comprises a cyclone to remove particles. The cleaning device 13 can be applied in all other embodiments to clean the electrostatic precipitator of the particulate filter device 6.

## Claims

1. Internal combustion engine (1), preferably a two-stroke engine for a large vessel, comprising an exhaust outlet (2) for disposing of exhaust out of a combustion chamber, an air inlet (3) for introducing air into the combustion chamber and at least one turbocharger (4) being connected to the exhaust outlet (2) by an exhaust passage (5) **characterized in that** a particulate filter device (6) is arranged downstream the exhaust outlet (2) on the high pressure side of the turbocharger, in particular of a turbine of the turbocharger, preferably in the exhaust passage (5).

2. Internal combustion engine (1) according to claim 1, **characterized in that** the particulate filter device (6) comprises an electrostatic precipitator.

3. Internal combustion engine (1) according to any one of the preceding claims, **characterized in that** the exhaust passage (5) comprises a filtering path (7) comprising the particulate filter device (6) and a standard path (8) such that only a part of the exhaust is filtered.

4. Internal combustion engine (1) according to any one of the preceding claims, **characterized in that** the internal combustion engine (1) comprises an exhaust gas recirculation path (9) arranged between exhaust outlet (2) and air inlet (3), wherein the particulate filter device (6) is arranged in the exhaust gas recirculation path (9), such that only part of the exhaust is led through the particulate filter device (6) and re-introduced into the air inlet (3).

5. Internal combustion engine (1) according to any one of the preceding claims, **characterized in that** at least one selective catalytic reactor (10) is arranged downstream the particulate filter device (6).

6. Internal combustion engine (1) according to any one of the preceding claims, **characterized in that** at least one heat exchanger (11), preferably a cooler, is arranged upstream or downstream the particulate filter device (6) or at least two heat exchangers are arranged downstream the exhaust outlet (2), in particular on the high pressure side of the engine, preferably one heat exchanger (11a) upstream the particulate filter device (6) and one heat exchanger (11b)downstream the particulate filter device (6).

7. Internal combustion engine (1) according to any one of the preceding claims, **characterized in that** an additive adding device (15) is arranged upstream and/or downstream the particulate filter device (6).

8. Internal combustion engine (1) according to claim 7, **characterized in that** the additive adding device is at least one scrubber (12), being arranged upstream or downstream the particulate filter device (6) or at least two scrubbers being arranged downstream the exhaust outlet (2) on the high pressure side of the engine (1), preferably one scrubber (12a) upstream the particulate filter device (6) and one scrubber (12b) downstream the particulate filter device.

9. Internal combustion engine (1) according to any one of the preceding claims, **characterized in that** the internal combustion engine (1) comprises a cleaning device (13) for cleaning the particulate filter device (6), in particular an ultrasonic cleaning device or a heat cleaning device.

10. Method for cleaning exhaust from an internal combustion engine, preferably a two-stroke engine for a large vessel, comprising the step of directing exhaust from an exhaust outlet (2) through a particulate filter device (6) arranged between exhaust outlet (2) and turbocharger (4) or between exhaust outlet (2) and an air inlet (3) of the internal combustion engine (1).

11. Method according to claim 10, **characterized in that** the exhaust from the particulate filter device (6) is directed through a selective catalytic reactor (10), in particular before or after entering the turbine of the turbocharger.

12. Method according to any one of claims 10 to 11, **characterized in that** the exhaust is cooled before and/or after entering the particulate filter device (6), in particular between exhaust outlet (2) and air inlet (3) of the internal combustion engine (1).

13. Method according to any one of claims 10 to 12, **characterized in that** an additive, in particular an alkaline, is added to the exhaust before or after entering the particulate filter device (6).

14. Method according to any one of claims 10 to 13, **characterized in that** the particulate filter device (6) is cleaned by means of a cleaning device (13), in particular an ultrasonic cleaning device or a heat cleaning device.

15. Method of refitting an internal combustion engine (1) by installing a particulate filter device (6) between an air outlet (2) of the internal combustion engine (1) and a turbocharger (4) or between an air outlet (2) of the internal combustion engine (1) and an air inlet (3) of the internal combustion engine (1).
